# EUROPEAN PATENT SPECIFICATION

(11) **EP 3 436 901 B1**
(45) Date of publication and mention of the grant of the patent: **29.04.2020**
(21) Application number: 16822859.1
(22) Date of filing: 14.12.2016
(51) Int. Cl.: G06F 3/01, G06F 1/16, G06F 3/0481, H04M 1/02, G02B 27/01

(54) **CONDUCTIVE CONTACTS FOR ALIGNMENT OF PORTABLE USER DEVICE IN VR VIEWER**
LEITFÄHIGE KONTAKTE ZUR AUSRICHTUNG EINER TRAGBAREN BENUTZERVORRICHTUNG IN VR-BETRACHTER
CONTACTS CONDUCTEURS POUR ALIGNER UN DISPOSITIF D'UTILISATEUR PORTABLE DANS UNE VISIONNEUSE VR

(30) Priority: 31.03.2016 US 201662315776 P; 13.09.2016 US 201615264416
(43) Date of publication of application: 06.02.2019
(73) Proprietor: Google LLC, Mountain View, CA 94043 (US)
(72) Inventor: MACINTOSH, Eric Allan, Mountain View, California 94043 (US)
(74) Representative: Maikowski & Ninnemann Patentanwälte Partnerschaft mbB
(86) International application number: PCT/US2016/066630
(87) International publication number: WO 2017/171944

(56) References cited:
- US-A1- 2015 234 189
- US-A1- 2016 018 853

## Description

### BACKGROUND

### Field of the Disclosure

The present disclosure relates generally to head-mounted displays and other virtual reality (VR) viewers, and more particularly to VR viewers that incorporate a separate, detachable portable user device to provide display functionality for the VR viewer.

### Description of the Related Art

Some virtual reality (VR) systems provide cost-effective VR immersion by employing a head-mounted display (HMO) device or other head-mounted VR viewer in which a portable user device of the user, such as a user's cell phone, is incorporated into the VR viewer so as to leverage the display panel of the portable user device to provide VR imagery to the user. Because the portable user device is removably incorporated into the VR viewer, it typically is difficult to ensure a fixed, determined alignment between the display panel of the portable user device and the lenses of the VR viewer. Accordingly, conventional VR viewers incorporate a manual alignment process whereby the user adjusts a position of the portable user device within the VR viewer based on some visual alignment cues. To illustrate, in some instances, the portable user device is controlled to display a line on its display panel, and the user is instructed to align this line with a notch formed in a border of the viewer surrounding the display panel. Such an approach typically only provides for a limited alignment. To illustrate, the noted line-notch alignment process may provide horizontal alignment but does not facilitate rotational alignment. Further, the portable user device may shift within the VR viewer during use, and thus bringing the display panel of the 25 portable user device out of alignment. Moreover, conventional alignment processes rely on the user's active assistance, and thus are susceptible to failure due to a user's unwillingness or inability to perform the manual alignment process.

US 2015/0234189 A1 describes a head mounted display system for use with a mobile computing device. The system comprises a soft main body having a retention pocket configured to accept and secure the mobile computing device and a lens assembly comprising two lenses configured to focus vision on respective areas of a display screen of the mobile computing device, the lens assembly held within one or more apertures formed in the main body, the two lenses mounted for independent movement with respect to each other, such that a split screen image may be viewed through the two lenses on the display screen. One embodiment involves using lens styluses with conductive material on the tips to create corresponding contact points on the mobile device screen, determining the contact points and computing any changes in software based on the positions. The contact points may be fixed, based upon the design of the lens assembly, such that when the styluses touch the mobile device screen, virtual reality, augmented reality or, more basically, virtual reality driver software may derive the interpupillary distance between the two eyes, which is useful for properly presenting virtual reality or augmented reality environments to a wearer of the mobile head mounted display.

US 2016/0018853 A1 concerns virtual reality viewers for use with touchscreen enabled mobile devices. The virtual reality viewer comprises: a housing configured to receive a mobile electronic device within an interior of the housing; and an input mechanism that is accessible from an exterior of the housing.

### SUMMARY

The invention is set out in the independent claims. Preferred embodiments are defined in the dependent claims.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a perspective view diagram of a VR viewer utilizing touchscreen conductive contacts for determining an orientation of a portable user device incorporated in the VR viewer in accordance with some embodiments.
FIG. 2 is a diagram illustrating a front view of an internal panel of a housing of the VR viewer implementing a set of conductive contacts and illustrating a technique for determining an orientation of a display panel of a portable user device incorporated in the VR viewer using the set of conductive contacts in accordance with some embodiments.
FIG. 3 is a diagram illustrating an example conductive contact electrically coupled to a conductive mass of a VR viewer so as to register a capacitive touch event at a touchscreen of a personal user device in accordance with some embodiments.
FIG. 4 is a perspective view diagram of a VR viewer utilizing touchscreen conductive contacts electrically coupled to a body of a user via a conductive user contact region so as to trigger capacitive touch events at a touchscreen of a personal user device incorporated in the VR viewer in accordance with some embodiments.
FIG. 5 is a cross-section view of a section of a housing of a VR viewer utilizing a finger-type configuration of touchscreen conductive contacts in accordance with some embodiments.
FIG. 6 is a block diagram illustrating a hardware configuration of a portable user device in accordance with some embodiments.
FIG. 7 is a flow diagram illustrating a method of determining a relative orientation of a portable user device incorporated in a VR viewer and configuring one or more display operations of the portable user device based on the relative orientation in accordance with some embodiments.

### DETAILED DESCRIPTION

Some types of VR viewers utilize the display, motion-sensing, and other processing capabilities of a user's compute-enabled cellular phone (hereinafter, "smart phone"), tablet computer, PDA, or other portable user device to provide VR functionality by temporarily and removably incorporating the portable user device in the housing of the VR viewer such that the display panel of the portable user device faces the user's eyes and are used to display VR imagery (e.g., stereoscopic imagery) to the user. The VR viewer typically is configured to allow the user to easily and quickly attach and detach the portable user device from the VR viewer. This typically results in some difference or misalignment between the actual orientation of the display panel of the portable user device and the intended, or designed, orientation of the display panel for which the lenses and other components of the VR viewer were designed.

To accommodate this misalignment, in at least one embodiment, the VR viewer incorporates a set of conductive contacts that are positioned within a housing of the VR viewer so as to contact a touchscreen of the portable user device when inserted in, attached to, or otherwise incorporated in the VR viewer. Each contact with the touchscreen by a conductive contact results in a corresponding touch event at the touchscreen. Each touch event includes a location of the touch event relative to a coordinate frame of the touchscreen. The actual position of this touch event may be compared to the expected location of the touch event when the portable user device was in the intended orientation to determine an offset between the actual touch event location and the expected touch event location. This offset may be determined for each conductive contact of the set, and the resulting set of offsets may be used to determine the actual orientation of the touchscreen, and as the touchscreen is aligned with the display panel, to determine the actual orientation of the display panel. This actual orientation may include one or both of a relative position of the display panel (that is, the shift in the X-Y plane) and a relative rotation of the display panel. Further, multiple conductive contacts of different effective contact lengths may be provided in the Z-direction so as to facilitate determination of the Z-direction position or shift of the display panel based on the number of these conductive contacts in contact with the touchscreen.

With the actual orientation of the display panel determined by the portable user device in this manner, the portable user device may configure one or more of its display operations based on this actual orientation. To illustrate, in at least one embodiment, a rendering sub-system of the portable user device may determine a spatial transform between the coordinate reference frame represented by the actual orientation and a coordinate reference frame represented by the designed orientation and apply this transform to VR imagery generated by the portable user device for display at the display panel, and thus configuring the VR imagery displayed at the display panel to accommodate for the non-optimal positioning of the portable user device in the VR viewer.

For ease of illustration, the conductive contacts are described herein as "contacting" the touchscreen, and thereby triggering touch events at the touchscreen. However, it will be appreciated that the touchscreen may be covered by display glass or other protective film, and thus this contact may be with the overlying display glass or film. Further, it will be appreciated that close proximity of the conductive contact will be sufficient to trigger the intended touch event at the touchscreen. Accordingly, reference to a conductive contact "contacting" a touchscreen may refer to actual physical contact, or to the conductive contact being in sufficient proximity to the touchscreen so as to trigger a touch event.

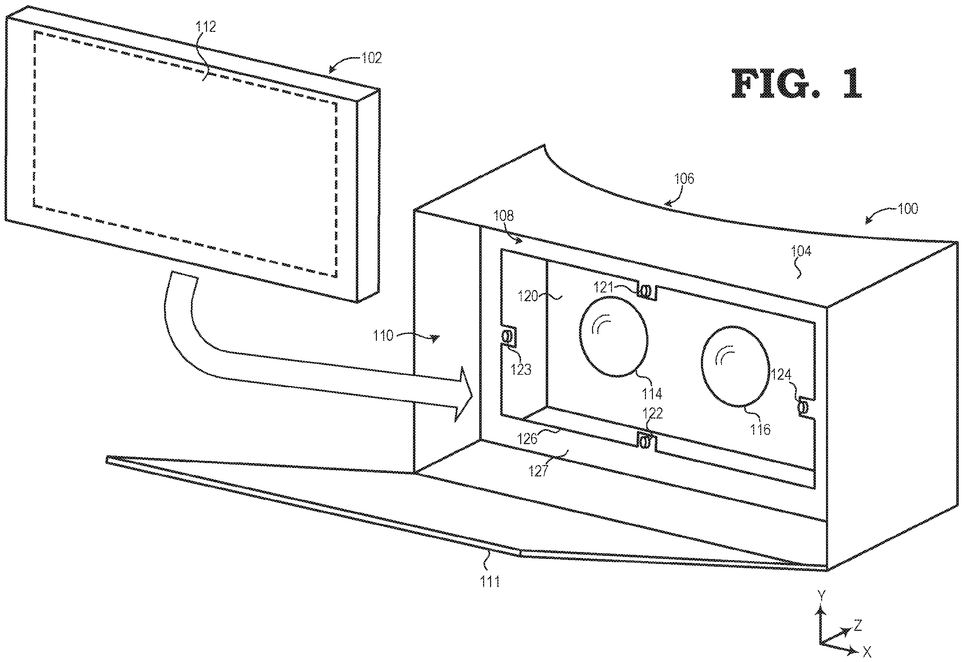

FIG. 1 illustrates a VR viewer 100 incorporating a portable user device 102 for the display of VR imagery in accordance with at least one embodiment. In this example, the portable user device 102 is illustrated as a cell phone. The VR viewer 100 includes a housing 104 that contains the components of the VR viewer 100 and typically is shaped so as to facilitate mounting on the head of a user. Thus, the housing 104 includes a user-facing side 106 and an opposing forward-facing side 108. Typically, the portable user device 102 is incorporated with the housing 104 at, or proximate to, the forward-facing side 108. In the illustrated example, the housing 104 includes a device retention compartment 110 into which the portable user device 102 is inserted so that a touchscreen 112 (and thus a corresponding display screen) of the portable user device 102 faces toward the user-facing side 106. As also illustrated in this example, the housing 104 includes a retention flap 111 to hold the portable user device 102 in place in the device retention compartment 110, as well as to prevent ambient light intrusion. In other embodiments, the housing 104 may include an aperture at the forward-facing side 108 and a mounting mechanism (e.g., one or more clamps, straps, or buckles) to mount the portable user device 102 to the forward-facing side 108 such that the display panel and touchscreen 112 are aligned with this aperture.

The housing 104 further contains the lens assemblies used to view the display panel of the portable user device 102. In the illustrated embodiment, these lens assemblies are implemented as two plano-convex lenses 114, 116 (one for each eye of the user) disposed at an internal panel of the housing 104. However, any of a variety of implementations of the lens assemblies, such as a Fresnel lens or a combination of lenses, may be implemented. The lens assemblies of the housing 104 typically are configured to provide an optimal viewing configuration (e.g., a specific focal length and angle) based on an expectation that the portable user device 102 is incorporated at the VR viewer 100 such that the display panel of the portable user device 102 has a designed, or expected, position and orientation relative to the lens assemblies or to the housing 104. However, as noted above, the user may not position the portable user device 102 in the housing 104 correctly, or the portable user device 102 may slip in the housing 104 while the user is using the VR viewer 100.

Accordingly, to accommodate such non-optimal or non-designed positioning of the portable user device 102 in the VR viewer 100, in at least one embodiment the housing 104 of the VR viewer 100 implements a set of conductive contacts (e.g., conductive contacts 121, 122, 123, 124) that are positioned in the housing 104 such that when the portable user device 102 is incorporated into the VR viewer 100 (e.g., inserted into the device retention compartment 110), some or all of the conductive contacts come into contact with the touchscreen 112. Typically, the touchscreen 112 is configured to react to change in capacitance caused by the contact of the touchscreen by a sufficiently conductive element. Accordingly, each conductive contact is configured to have sufficient conductive ability to trigger a contact event at the touchscreen 112 when the conductive contact comes into contact with the touchscreen 112. As described below, this sufficient conductivity may be achieved by electrically coupling the conductive contact to the user's body, or forming the conductive contact with sufficient conductive mass (or electrically coupling the conductive contact to a sufficient conductive mass) so that the conductive contact effectively operates as a ground reference.

Each touch event caused by contact to the touchscreen 112 by a conductive contact of the housing 104 is defined in part by an (X,Y) location at which the contact occurred on the touchscreen 112. If the portable user device 102 is incorporated into the housing 104 of the VR viewer at or very near its intended position, the actual location of the touch event caused by a conductive contact would be at or very near the expected location of the touch event for that conductive contact given the design parameters of the particular portable user device 102. Thus, if the portable user device 102 is in fact shifted or rotated away from this intended position, an actual location of one or more touch events caused by one or more of the conductive contacts will be offset from the corresponding expected location of the touch event. Accordingly, as described in greater detail below, in at least one embodiment the portable user device 102 uses these offsets between actual touch locations of the conductive contacts and their expected touch locations to determine an actual orientation of the portable user device 102 relative to the housing 104 or relative to the lens assemblies. The portable user device 102 then may configure one or more of its display operations based on this actual orientation.

To illustrate, the portable user device 102 may render VR imagery and display this VR imagery to the user via the display panel. For example, the portable user device 102 may be configured to logically divide the display panel into a left region and a right region, and render stereoscopic pairs of VR images, one VR image of a pair displayed at the left region and the other VR image of the pair displayed concurrent at the right region, thereby presenting a stereoscopic VR view to the user when viewed through the lens assemblies. However, the portable user device 102 may be configured to render this VR imagery based on an assumption of a designed or expected orientation between the display panel and the lens assemblies of the housing 104. Thus, in the event that the portable user device 102 is incorporated into the VR viewer 100 such that the display panel is not in this expected orientation, distortion, offset, or other aberrations may be introduced as the user views the display panel through the lens assemblies. Thus, to correct for a "crooked" positioning of the portable user device 102, the portable user device 102 may determine a transform to correct for the difference between the actual orientation and the intended orientation, and then apply the transform to the VR imagery as it is rendered to counteract or compensate for the non-optimal orientation of the display panel as it displays the altered VR imagery. In this manner the portable user device 102 may compensate for its non-optimal positioning within the housing 104 without requiring manual repositioning or manual alignment by the user (so long as the actual orientation is not excessively misaligned).

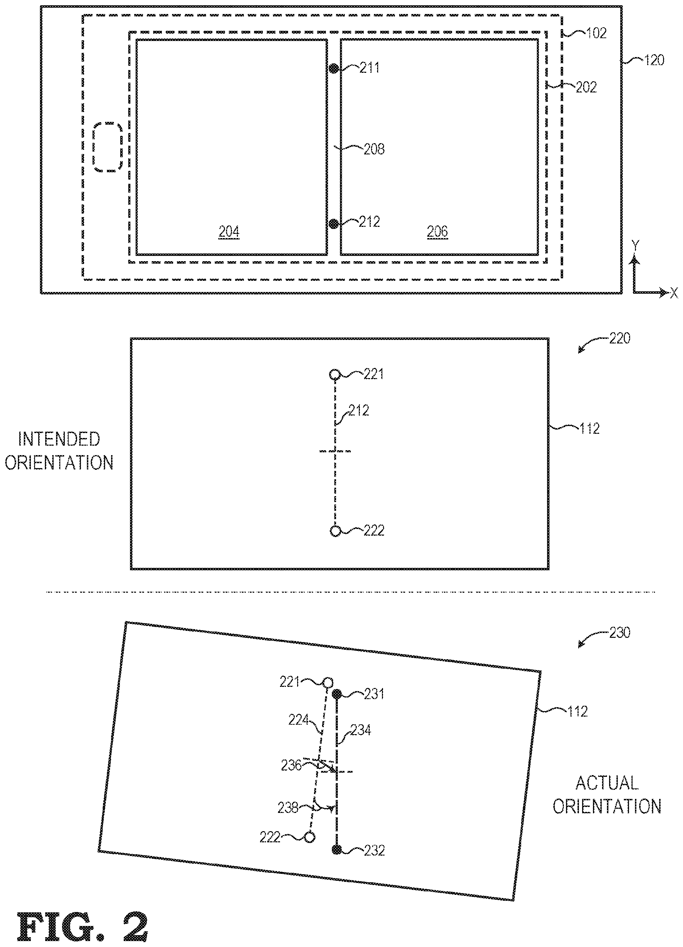

In the example of FIG. 1, the set of conductive contacts is depicted as a set of four conductive contacts 121-124 disposed on tabs that are disposed at a periphery of a display aperture 126 in an internal panel 127 of the housing 104 that forms a part of the device retention compartment 110 through which the user views the display panel when the VR viewer is mounted on the user's head. In this particular example, the conductive contacts 121-124 are disposed on tabs or other extensions that extend the corresponding conductive contact out from the periphery, with each tab being positioned at or near the middle of each corresponding edge of the display aperture 126. It should be noted that the dimensions of the conductive contacts and their associated elements, such as the depicted tabs, in FIG. 1 (as well as in FIGs. 2, 4, and 5) are not necessarily depicted to scale relative to the other components of the VR viewer 100, but instead may be enlarged relative to these other components to facilitate effective illustration of their features and attributes.

Although four conductive contacts are depicted in FIG. 1, any number of conductive contacts may be implemented. To illustrate, a set of two conductive contacts may be sufficient to determine any offsets of the display panel in the X or Y directions, as well as any rotation of the display panel around the Z axis. Further, the conductive contacts may be positioned in other locations besides those shown in FIG. 1. Generally, a user is less sensitive to detail at the periphery of the user's vision, and thus it may be advantageous to locate the conductive contacts so that they fall at the far corners of the display panel. For example, a set of two conductive contacts may be implemented such that the two conductive contacts are positioned at or near opposite corners of the display aperture 126. Another advantageous location for the conductive contacts is directly in front of where the user's nose will be located as this location allows the conductive contacts to work with portable electronic devices of various sizes. Further, it is less likely that conductive contacts in the middle will rotate off the display or touchscreen active area, in contrast to those at the extreme edges

FIG. 2 depicts a view of an implementation of the internal panel 120 of the housing 104 of the VR viewer 100 in accordance with at least one embodiment. In the depicted view, the internal panel 120 is illustrated from the user's perspective, and thus the portable user device 102 is depicted as located behind the internal panel 120 such that the touchscreen 112 and display panel (collectively referred to herein as the "screen assembly 202") are viewable through the display aperture 126. In this example, the display aperture 126 is segmented into a left aperture 204 and a right aperture 206 separated by a thin dividing panel strip 208 upon which two conductive contacts 211, 212 are disposed. Note that the dividing panel strip 208 and conductive contacts 211, 212 may be illustrated with enlarged scale for purposes of illustration.

As illustrated by diagram 220 of FIG. 2, when the portable user device 102 is positioned in the housing 104 in its designed or intended orientation, the conductive contacts 211, 212 are expected to contact the touchscreen 112 at locations 221, 222, respectively, and thus generate touch events at those locations. As such, these two locations 221, 222 may define a defined orientation 224 illustrated by the dashed lines of diagram 220. However, when the portable user device 102 is positioned in the housing 104 with any of a lateral, vertical, or rotational offset, one or both of the conductive contacts 211, 212 will contact the touchscreen 112 at a location other than the corresponding expected contact location. To illustrate, diagram 230 illustrates an example whereby the portable user device 102 is positioned such that there is an exaggerated lateral, vertical, and rotational offset such that the conductive contact 211 contacts the touchscreen 112 at location 231 (instead of location 221) and the conductive contact 212 contacts the touchscreen 112 at location 232 (instead of location 222). The portable user device 102 may use these two contact locations 231, 232 to determine the actual orientation 234 (represented by the dashed lines between locations 231, 232) of the display panel.

With the actual orientation 234 of the touchscreen 112 (and the display panel) so determined, the portable user device 102 may use this actual orientation to adjust the display operations being performed by the portable user device 102. To illustrate, as noted above, the portable user device 102 may determine a transform between the actual orientation 234 and the intended orientation 224 (this transform represented by the arrows 236 and 238) and apply this transform to VR imagery being rendered so as to compensate for the misalignment of the display panel of the portable user device 102.

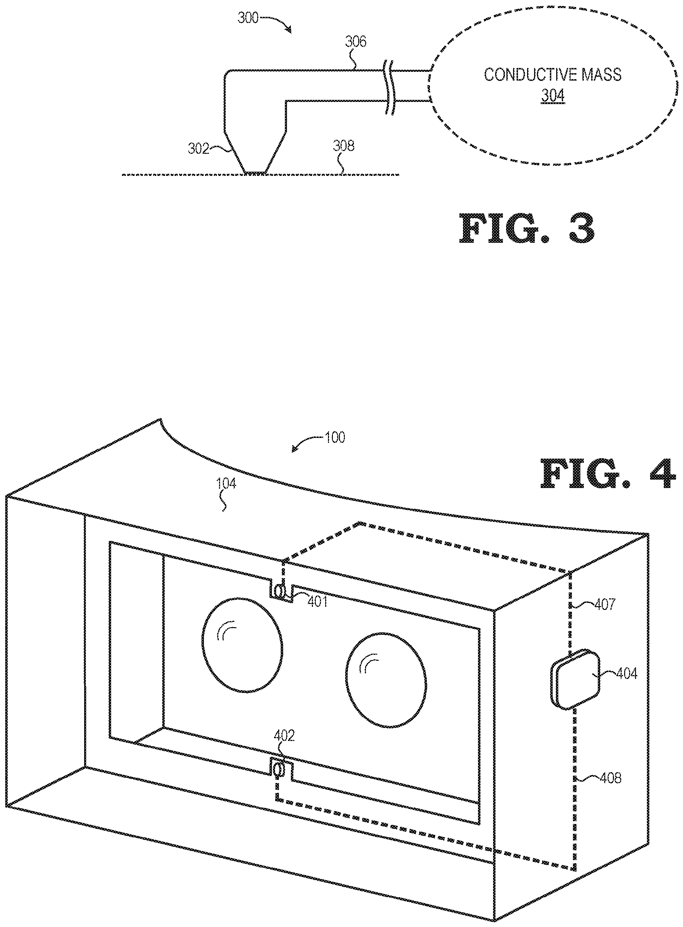

FIGs. 3 and 4 illustrate example implementation of the conductive contacts of the VR viewer 100 in accordance with some embodiments. As noted above, the conductive contacts are implemented to trigger a touch event at the touchscreen 112 of the portable user device 102 for display panel alignment purposes. In order to trigger a touch event at a capacitive-type touchscreen, as commonly found on cell phones, tablet computers, and other such devices, the conductive contact must be sufficiently conductive so as to detectably alter the capacitance of the touchscreen at the location of contact.

In one approach, a conductive contact may be made effectively conductive through the use of a sufficient amount of conductive material. To this end, the conductive contact may be implemented as a slug of metal (e.g., copper, aluminum, gold, silver, or combinations thereof) or other conductive material. However, the dimensions of such a slug may cause the conductive contact to excessively obscure the display panel over which is it positioned, and thus distract the user. Accordingly, as illustrated by the example conductive contact 300 of FIG. 3, a conductive contact may be implemented as a relatively small contact point 302 electrically coupled to a relatively large conductive mass 304 via a thin conductive neck element 306, which may comprise a rigid conductive element (e.g., a conductive bar), a flexible conductive element (e.g., a conductive wire), or a combination thereof. The neck element 306 may be sprung so as to pressure the contact point 302 into a surface 308 of the touchscreen 112. The conductive mass 304 may be composed of any mass of metal or other conductive material in the VR viewer 100. To illustrate, the conductive mass 304 may comprise a metal component of the housing 104, such as a metal panel of the housing 104. Alternatively, the conductive mass 304 may be a ball, disc, column, or other shape of metal or conductive material implemented specifically for use with the contact point 302. Further, multiple contact points 300 may utilize the same conductive mass 304.

In some implementations, implementation of a conductive contact using a conductive mass may be cost prohibitive or may introduce excessive weight in the VR viewer 100, leading to viewer discomfort as the VR viewer 100 extends from the head of the user. Accordingly, rather than use a relatively large amount of conductive material to render the conductive contact sufficiently conductive to trigger a touch event, the VR viewer 100 may use the conductivity, or capacitive capacity, of the user's body to provide sufficient conduction. To illustrate, FIG. 4 depicts an implementation of the VR viewer 100 whereby the housing 104 implements a set of two conductive contacts 401, 402 that comprise conductive points that contact the touchscreen 112 when the portable user device 102 is inserted into the housing 104. The conductive points in turn are electrically connected to a conductive user contact region 404 of the housing 104 via conductive interconnects 407, 408, respectively. The user contact region 404 comprises a conductive region (e.g., a metal pad, metal button, metal rim, etc.) that is contacted by a user's body. In the depicted example of FIG. 4, the user contact region 404 comprises a metal patch which the user is instructed to contact, either by audible output from the portable user device or via display of instructions via the display panel. In other embodiments, the user contact region 404 may be implemented at a portion of the housing 104 that is in contact with the user's face or head when worn by the user, such as along a forehead bridge or on a nose bridge, and thus eliminating the need to have the user perform a particular action for the alignment process. The conductive connection between the user contact region 404 and the contact points of the conductive contacts 401, 402 create conductive pathways between the conductive contacts 401, 402 and the user's hand or face, and thus triggering touch events at the touchscreen 112.

The conductive interconnects 407, 408 may be implemented using any of a variety of conductive materials or combinations thereof. To illustrate, the conductive interconnect 407, 408 may be implemented using one or more strands of metal wiring strung between the contact points and the user contact region 404. Alternatively, the conductive interconnects 407, 408 may be implemented using flexible conductive fabric or conductive foil attached to the sides of one or more surfaces of the housing 104 between the contact points and the user contact region 404. As yet another example, in the event that the material of the housing 104 is capable of being effectively printed upon (e.g., the cardboard material often utilized for the Google Cardboard VR viewer), the conductive interconnects 407, 408 may be implemented using conductive ink printed on the appropriate surfaces of the housing 104 before its assembly.

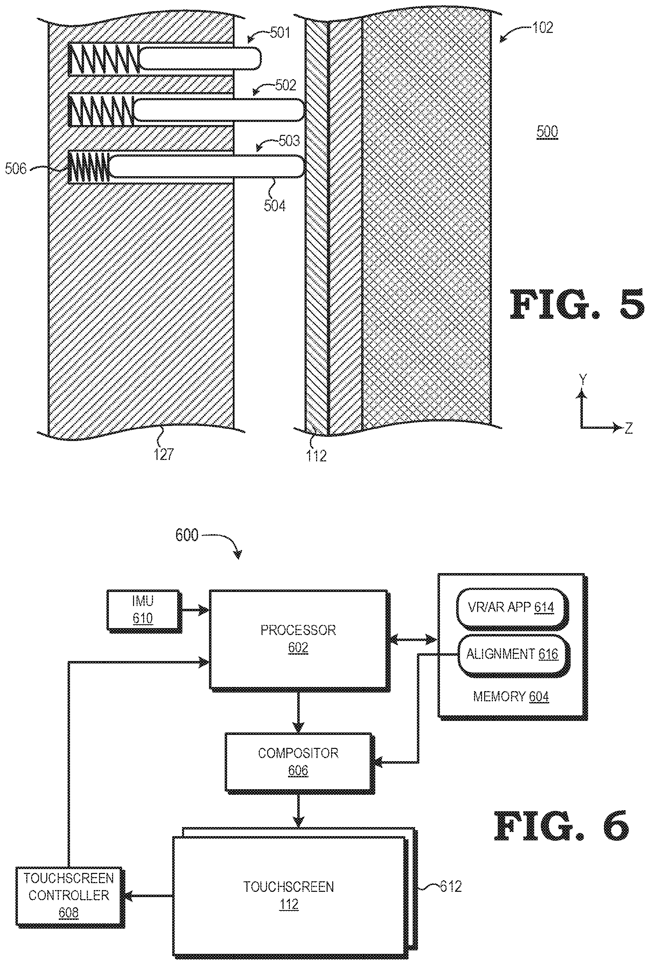

In addition to determining one or more of the lateral offset, vertical offset, and rotational offset of the actual orientation of the display panel from the intended orientation, it may prove useful to determine the fore-aft offset (that is, the offset along the Z axis) of the display panel from the intended Z-axis position of the display panel. FIG. 5 depicts a finger-contact configuration that facilitates detection of the Z-axis position of the display panel of the portable user device 102. As depicted by the example of FIG. 5, in which a cross-section 500 of a portion of an implementation of the internal panel 127 is disclosed, in this finger-contact configuration, multiple conductive contacts having different effective lengths along the Z-axis (e.g., conductive contacts 501, 502, 503) are positioned facing the touchscreen 112 of the portable user device 102. Each conductive contact includes a pin (e.g., pin 504) mounted on a spring 506 or other flexible base, with each pin having a different length, and thus resulting in each pin extending to a different distance from a surface of the internal panel 127 when the spring is unloaded. Thus, the extent of the Z-axis offset of the display panel may be determined by the number of pins in contact with the touchscreen 112. To illustrate, when only one pin contact is detected, the display panel is determined to be at a distance from the internal panel 127 that is between the unloaded distance of the pin of conductive contact 503 and the loaded distance of the pin of conductive contact 502. When two pin contacts are detected, the display panel is determined to be at a distance from the internal panel that is between the unloaded distance of the pin of conductive contact 502 and the loaded distance of the pin of conductive contact 501. When three pin contacts are detected, the display panel is determined to be at a distance from the internal panel that at or less than the unloaded distance of the pin of conductive contact 501.

FIG. 6 illustrates an example hardware configuration 600 of the portable user device 102. The hardware configuration 600 includes a processor 602, a system memory 604, a compositor 606, a touchscreen controller 608, an inertial measurement unit (IMU) 610, the touchscreen 112, and a corresponding display panel 612, and a touchscreen controller 608.

The processor 602 comprises one or more central processing units (CPUs), graphics processing units (GPUs), or a combination of one or more CPUs and one or more GPUs. The Snapdragon(TM) 810 MSM8994 system-on-a-chip (SoC) from Qualcomm Incorporated is an example of a commercially-available implementation of the processor 602. The compositor 606 may be implemented as, for example, an ASIC, programmable logic, as one or more GPUs executing software that manipulates the one or more GPUs to provide the described functionality, or a combination thereof.

In operation, the processor 602 executes a VR/AR application 614 (stored in, for example, the system memory 604) to provide VR/AR functionality for a user. As part of this process, the VR/AR application 614 manipulates the processor 602 or associated processor to render a sequence of VR images for display at the display panel 612, with the sequence of images representing a VR or AR scene. The compositor 606 operates to drive the display panel 612 to display the sequence of images, or a representation thereof. The processor 602 further executes an alignment routine 616 to perform the display panel alignment compensation processes described herein. The alignment routine 616 comprises an executable set of instructions which may be implemented as part of the VR/AR application 614 or as a separate software program or application.

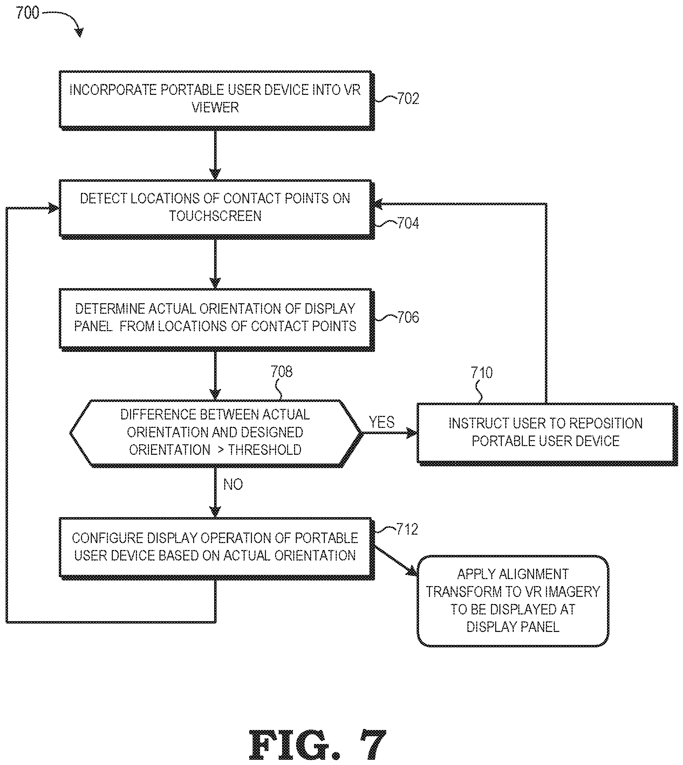

FIG. 7 illustrates an example method 700 of operation implemented at least in part by execution of the alignment routine 616 by the processor 602 in the hardware configuration 600 depicted in FIG. 6 in accordance with some embodiments. The method 700 initiates at block 702 with the user's insertion, attachment, or other removable incorporation of the portable user device 102 into the housing 104 of the VR viewer 100. In response to this incorporation, one or more conductive contacts of a set of conductive contacts of the VR viewer 100 contact the touchscreen 112 and thus triggers at block 704 the detection of touch events by the touchscreen controller 608 at their respective contact locations on the touchscreen 112.

At block 706, the alignment routine 616 manipulates the processor 602 to determine the actual orientation of the display panel 612 based on the contact locations determined at block 704. As described above, the actual orientation of the display panel 612 may be determined as relative the expected contact points of the set of conductive contacts if the portable user device 102 were to be positioned in the intended or designed orientation. To illustrate, the alignment routine 616 may be programmed with the expected contact points as determined by a technician or through modeling from the overall dimensions of the portable user device 102, the dimensions of the display panel 612 of the portable user device, the dimensions of the device retention compartment 110 of the housing 104, the locations of the conductive contacts in the housing 104, and the like. With these expected contact points defining the intended orientation of the display panel 612, the actual orientation may be determined based on the offsets of the actual contact locations from the corresponding expected contact locations.

It will be appreciated that in some instances, the misalignment of the portable user device 102 may be excessive and thus difficult or impractical to compensate for using spatial warping of the VR imagery or other display operation modification. Accordingly, at block 708 the alignment routine 616 manipulates the processor 602 to determine the difference(s) between the actual orientation of the display panel 612 and the designed orientation of the display panel 612 and compare this difference to a specified threshold. In some embodiments, different thresholds may be applied for different differences. To illustrate, a different threshold may be applied to the lateral or vertical offset difference than the threshold applied to the rotational offset. In the event that the specified threshold is exceeded, the portable user device 102 is expected to be unable to adequately compensate for the misalignment, and thus at block 710 the portable user device 102 instructs the user to manually attempt to realign the portable user device 102 within the housing 104. This instruction may be provided as audio output provided by the portable user device 102, as instructions displayed to the user via the display panel 612, or a combination thereof. After the user has realigned the portable user device 102, the method 700 returns to block 704 and the process of method 700 proceeds again with the new orientation of the portable user device 102.

In the event that the difference(s) between the actual and intended orientations do not exceed the corresponding threshold(s), it is expected that the portable user device 102 can compensate for the misalignment of the display panel 612. Accordingly, at block 712 the alignment routine 616 manipulates the processor 602 to configure at least one display operation of the portable user device 102 based on the actual orientation of the display panel 612. As noted above, this configuration can include employing a spatial warping transform at the VR/AR application 614 or the compositor 606 to transform rendered VR imagery so as to accommodate the misalignment of the actual orientation of the display panel 612. As the portable user device 102 may shift position during use, the process of blocks 704-712 may be periodically repeated to adjust for any such shifting in the relative orientation of the portable user device 102.

Thus, as illustrated by the process of method 700, the portable user device 102 may utilize the conductive contacts implemented in the housing 104 of the VR viewer 100 to determine the difference between the actual orientation of the display panel 612 and the intended or expected orientation, and thus automatically compensate for this misalignment without requiring manual intervention by the user.

In some embodiments, certain aspects of the techniques described above may implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A head-mounted virtual reality (VR) viewer (100) comprising:
a housing (104) to removably incorporate a portable user device (102) having a touchscreen (112) associated with a display panel (612); and
a set of two or more conductive contacts (121-124, 401, 402) positioned in the housing so as to trigger corresponding touch events at the touchscreen of the portable user device when the portable user device (102) is incorporated at the housing,
wherein the housing (104) comprises a device retention compartment (110) in which the portable user device (102) is to be positioned, the device retention compartment (110) including a display aperture (126) through which the display panel (612) of the portable user device (102) can be viewed by a user, and **characterized in that** the set of conductive contacts (121 -124, 401, 402) are disposed at a periphery of the display aperture (126) on at least two edges of the display aperture (126).

2. The head-mounted VR viewer of claim 1, wherein:
the set of conductive contacts comprises conductive contacts (300) with an amount of conductive material sized to trigger touch responses at the touchscreen.

3. The head-mounted VR viewer of claim 1, further comprising:
at least one conductive user contact region (404) to contact a body of a user; and
a set of conductive interconnects (407, 408) coupling the at least one conductive user contact region to the set of conductive contacts.

4. The head-mounted VR viewer of claim 3, wherein the at least one conductive user contact region is positioned on the housing so as to contact one of: a hand of the user; or a head of the user when the head-mounted VR viewer is mounted on the head of the user and/or wherein the conductive interconnects of the set of conductive interconnects are composed of at least one of: conductive wiring; conductive foil; conductive fabric; and conductive ink.

5. The head-mounted VR viewer of claim 1, further comprising:
the portable user device, wherein the portable user device is configured to detect a respective location (231, 232) on the touchscreen for each touch event triggered by a conductive contact of the set of conductive contacts, determine an orientation of the display panel relative to the housing based on the detected respective location for each touch event, and configure at least one display operation of the portable user device based on the determined orientation.

6. A method (700) for a portable user device (102) having a touchscreen (112) associated with a display panel (612), the method comprising:
responsive to removably incorporating (702) the portable user device into the housing (104) of the head-mounted VR viewer (100) according to any of the previous claims, detecting (704) a respective location (231, 232) on the touchscreen of the portable user device for each touch event triggered by a conductive contact (121-124, 401, 402) of the set of conductive contacts; and
determining (706, 708), at the portable user device, an orientation (234) of the display panel (612) of the portable user device relative to the housing based on the detected respective location for each touch event.

7. The method of claim 6, further comprising:
configuring (710, 712) at least one display operation of the portable user device based on the orientation.

8. The method of claim 7, wherein:
configuring the at least one display operation of the portable user device comprises configuring (712) the at least one display operation responsive to a difference between the orientation and a defined expected orientation (224) of the display panel being less than a specified threshold; and
the method further includes:
providing (710) audio or visual instructions to a user to manually realign the portable user device in the housing responsive to the difference being greater than the specified threshold.

9. The method of claim 7, wherein:
configuring the at least one display operation of the portable user device comprises configuring an orientation of virtual reality imagery displayed to the user via the display panel.

10. The method of claim 6, wherein:
the orientation of the display panel comprises an actual orientation (234) of the display panel relative to a defined expected orientation (224) of the display panel with respect to the housing.

11. The method of claim 6, wherein:
determining the orientation of the display panel comprises:
determining an offset between an actual location (231, 232) on the touchscreen for a touch event triggered by a conductive contact and an expected location for the touch event (221, 222); and
determining at least one of a position of the display panel and a rotation of the display panel based on the offset.

12. A portable user device (102) comprising:
a touchscreen (112);
a display panel (612);
a memory (604) to store a set of executable instructions (616); and
a processor (602) coupled to the touchscreen, display panel, and memory, the processor to execute the set of executable instructions, wherein execution of the set of executable instructions manipulates the processor to:
responsive to removably incorporating the portable user device into the housing (104) of the head-mounted virtual reality (VR) viewer (100) according to any of claims 1 to 5, detect a respective location (231, 232) on the touchscreen (112) of the portable user device for each touch event triggered by a conductive contact (121-124, 401, 402) of the set of conductive contacts; and
determine an orientation (234) of the display panel (612) of the portable user device relative to the housing based on the detected respective location for each touch event.

13. The portable user device of claim 12, wherein execution of the set of executable instructions further manipulates the processor to:
configure at least one display operation of the portable user device based on the orientation.

14. The portable user device of claim 13, wherein manipulation of the processor to configure the at least one display operation of the portable user device comprises configuration of an orientation of virtual reality imagery displayed to the user via the display panel.

15. The portable user device of claim 12, wherein:
the orientation of the display panel comprises an actual orientation (234) of the display panel relative to a defined expected orientation (224) of the display panel with respect to the housing, wherein manipulation of the processor to determine the orientation of the display panel comprises manipulation of the processor to:
determine an offset between an actual location on the touchscreen for a touch event triggered by a conductive contact and an expected location for the touch event; and
determine at least one of a position of the display panel and a rotation of the display panel based on the offset.

## Patentansprüche

1. Am Kopf befestigter Virtual-Reality(VR)-Viewer (100), umfassend:
ein Gehäuse (104) zur abnehmbaren Aufnahme eines tragbaren Benutzergeräts (102), das einen mit einem Anzeigefeld (612) assoziierten Touchscreen (112) aufweist; und
einen Satz von zwei oder mehr leitenden Kontakten (121-124, 401, 402), die in dem Gehäuse positioniert sind, um entsprechende Berührungsereignisse an dem Touchscreen des tragbaren Benutzergeräts auszulösen, wenn das tragbare Benutzergerät (102) in dem Gehäuse aufgenommen ist,
wobei das Gehäuse (104) eine Gerätehaltekammer (110) umfasst, in der das tragbare Benutzergerät (102) zu positionieren ist, wobei die Gerätehaltekammer (110) eine Anzeigeöffnung (126) beinhaltet, durch die das Anzeigefeld (612) des tragbaren Benutzergeräts (102) durch einen Benutzer betrachtet werden kann, und **dadurch gekennzeichnet, dass** der Satz von leitenden Kontakten (121-124, 401, 402) an einem Umfang der Anzeigeöffnung (126) an zumindest zwei Rändern der Anzeigeöffnung (126) angeordnet ist.

2. Am Kopf befestigter VR-Viewer nach Anspruch 1, wobei:
der Satz von leitenden Kontakten leitende Kontakte (300) mit einer Menge an leitendem Material umfasst, die so bemessen ist, dass sie Berührungsreaktionen an dem Touchscreen auslöst.

3. Am Kopf befestigter VR-Viewer nach Anspruch 1, ferner umfassend:
zumindest einen leitenden Benutzerkontaktbereich (404), um einen Körper eines Benutzers zu kontaktieren; und
einen Satz von leitenden Zwischenverbindungen (407, 408), die den zumindest einen leitenden Benutzerkontaktbereich mit dem Satz von leitenden Kontakten verbinden.

4. Am Kopf befestigter VR-Viewer nach Anspruch 3, wobei der zumindest eine leitende Benutzerkontaktbereich auf dem Gehäuse positioniert ist, um eines zu kontaktieren von: einer Hand des Benutzers; oder einem Kopf des Benutzers, wenn der am Kopf befestigte VR-Viewer am Kopf des Benutzers angebracht ist, und/oder wobei die leitenden Zwischenverbindungen des Satzes von leitenden Zwischenverbindungen aus zumindest einem bestehen von: leitender Verdrahtung; leitender Folie; leitendem Gewebe; und leitender Tinte.

5. Am Kopf befestigter VR-Viewer nach Anspruch 1, ferner umfassend:
das tragbare Benutzergerät, wobei das tragbare Benutzergerät konfiguriert ist, einen jeweiligen Ort (231, 232) auf dem Touchscreen für jedes durch einen leitenden Kontakt des Satzes von leitenden Kontakten ausgelöste Berührungsereignis zu erkennen, eine Ausrichtung des Anzeigefelds relativ zu dem Gehäuse basierend auf dem jeweiligen erkannten Ort für jedes Berührungsereignis zu ermitteln, und zumindest einen Anzeigebetrieb des tragbaren Benutzergeräts basierend auf der ermittelten Ausrichtung zu konfigurieren.

6. Verfahren (700) für ein tragbares Benutzergerät (102), das einen mit einem Anzeigefeld (612) assoziierten Touchscreen (112) aufweist, das Verfahren umfassend:
in Reaktion auf das entfernbare Aufnehmen (702) des tragbaren Benutzergeräts in das Gehäuse (104) des am Kopf befestigten VR-Viewers (100) nach einem der vorhergehenden Ansprüche, Erkennen (704) eines jeweiligen Orts (231, 232) auf dem Touchscreen des tragbaren Benutzergeräts für jedes durch einen leitenden Kontakt (121-124, 401, 402) des Satzes von leitenden Kontakten ausgelöste Berührungsereignis; und
Ermitteln (706, 708), an dem tragbaren Benutzergerät, einer Ausrichtung (234) des Anzeigefelds (612) des tragbaren Benutzergeräts relativ zu dem Gehäuse basierend auf dem jeweiligen erkannten Ort für jedes Berührungsereignis.

7. Verfahren nach Anspruch 6, ferner umfassend:
Konfigurieren (710, 712) zumindest einer Anzeigeoperation des tragbaren Benutzergeräts basierend auf der Ausrichtung.

8. Verfahren nach Anspruch 7, wobei:
das Konfigurieren der zumindest einen Anzeigeoperation des tragbaren Benutzergeräts ein Konfigurieren (712) der zumindest einen Anzeigeoperation in Reaktion darauf umfasst, dass eine Differenz zwischen der Ausrichtung und einer definierten erwarteten Ausrichtung (224) des Anzeigefelds kleiner als ein angegebener Schwellenwert ist; und
das Verfahren ferner beinhaltet:
Bereitstellen (710) von akustischen oder visuellen Anweisungen für einen Benutzer zum manuellen Neuausrichten des tragbaren Benutzergeräts in dem Gehäuse in Reaktion darauf, dass die Differenz größer als der angegebene Schwellenwert ist.

9. Verfahren nach Anspruch 7, wobei:
das Konfigurieren der zumindest einen Anzeigeoperation des tragbaren Benutzergeräts ein Konfigurieren einer Ausrichtung des Virtual-Reality-Bildes umfasst, das dem Benutzer über das Anzeigefeld angezeigt wird.

10. Verfahren nach Anspruch 6, wobei:
die Ausrichtung des Anzeigefelds eine tatsächliche Ausrichtung (234) des Anzeigefelds relativ zu einer definierten erwarteten Ausrichtung (224) des Anzeigefelds in Bezug auf das Gehäuse umfasst.

11. Verfahren nach Anspruch 6, wobei:
das Ermitteln der Ausrichtung des Anzeigefelds umfasst:
Ermitteln eines Versatzes zwischen einem tatsächlichen Ort (231, 232) auf dem Touchscreen für ein durch einen leitenden Kontakt ausgelöstes Berührungsereignis und einem erwarteten Ort für das Berührungsereignis (221, 222); und
Ermitteln zumindest eines von einer Position des Anzeigefelds und einer Drehung des Anzeigefelds basierend auf dem Versatz.

12. Tragbares Benutzergerät (102), umfassend:
einen Touchscreen (112);
ein Anzeigefeld (612);
einen Speicher (604) zum Speichern eines Satzes von ausführbaren Anweisungen (616); und
einen Prozessor (602), der mit dem Touchscreen, dem Anzeigefeld und dem Speicher gekoppelt ist, wobei der Prozessor dazu dient, den Satz von ausführbaren Anweisungen auszuführen, wobei die Ausführung des Satzes von ausführbaren Anweisungen den Prozessor dazu veranlasst:
in Reaktion auf das entfernbare Aufnehmen des tragbaren Benutzergeräts in das Gehäuse (104) des am Kopf befestigten Virtual-Reality(VR)-Viewers (100) nach einem der Ansprüche 1 bis 5, einen jeweiligen Ort (231, 232) auf dem Touchscreen (112) des tragbaren Benutzergeräts für jedes durch einen leitenden Kontakt (121-124, 401, 402) des Satzes von leitenden Kontakten ausgelöste Berührungsereignis zu erkennen; und
eine Ausrichtung (234) des Anzeigefelds (612) des tragbaren Benutzergeräts relativ zu dem Gehäuse basierend auf dem jeweiligen erkannten Ort für jedes Berührungsereignis zu ermitteln.

13. Tragbares Benutzergerät nach Anspruch 12, wobei die Ausführung des Satzes von ausführbaren Anweisungen den Prozessor ferner dazu veranlasst:
zumindest eine Anzeigeoperation des tragbaren Benutzergeräts basierend auf der Ausrichtung zu konfigurieren.

14. Tragbares Benutzergerät nach Anspruch 13, wobei das Veranlassen des Prozessors zum Konfigurieren der zumindest einen Anzeigeoperation des tragbaren Benutzergeräts eine Konfiguration einer Ausrichtung des Virtual-Reality-Bildes umfasst, das dem Benutzer über das Anzeigefeld angezeigt wird.

15. Tragbares Benutzergerät nach Anspruch 12, wobei:
die Ausrichtung des Anzeigefelds eine tatsächliche Ausrichtung (234) des Anzeigefelds relativ zu einer definierten erwarteten Ausrichtung (224) des Anzeigefelds in Bezug auf das Gehäuse umfasst, wobei das Veranlassen des Prozessors, die Ausrichtung des Anzeigefelds zu ermitteln, umfasst, den Prozessor dazu zu veranlassen:
einen Versatz zwischen einem tatsächlichen Ort auf dem Touchscreen für ein durch einen leitenden Kontakt ausgelöstes Berührungsereignis und einem erwarteten Ort für das Berührungsereignis zu ermitteln; und
basierend auf dem Versatz zumindest eines von einer Position des Anzeigefelds und einer Drehung des Anzeigefelds zu ermitteln.

## Revendications

1. Visiocasque de réalité virtuelle (VR) (100) comprenant :
un boîtier (104) pour incorporer de manière amovible un dispositif utilisateur portable (102) ayant un écran tactile (112) associé à un panneau d'affichage (612) ; et
un ensemble de deux contacts conducteurs ou plus (121-124, 401, 402) positionnés dans le boîtier afin de déclencher des événements tactiles correspondants sur l'écran tactile du dispositif utilisateur portable lorsque le dispositif d'utilisateur portable (102) est incorporé au boîtier,
dans lequel le boîtier (104) comprend un compartiment de rétention de dispositif (110) dans lequel le dispositif utilisateur portable (102) doit être positionné, le compartiment de rétention de dispositif (110) comprenant une ouverture d'affichage (126) par laquelle le panneau d'affichage (612) du dispositif d'utilisateur portable (102) peut être visualisé par un utilisateur, et **caractérisé en ce que** l'ensemble de contacts conducteurs (121 -124, 401,402) est disposé à une périphérie de l'ouverture d'affichage (126) sur au moins deux bords de l'ouverture d'affichage (126).

2. Visiocasque VR selon la revendication 1, dans lequel :
l'ensemble de contacts conducteurs comprend des contacts conducteurs (300) avec une quantité de matériau conducteur dimensionné pour déclencher des réponses tactiles sur l'écran tactile.

3. Visiocasque VR selon la revendication 1, comprenant en outre :
au moins une région de contact utilisateur conducteur (404) pour contacter un corps d'un utilisateur ; et
un ensemble d'interconnexions conductrices (407, 408) couplant l'au moins une région de contact utilisateur conducteur à l'ensemble de contacts conducteurs.

4. Visiocasque VR selon la revendication 3, dans laquelle l'au moins une région de contact utilisateur conducteur est positionnée sur le boîtier afin de contacter l'un parmi : une main de l'utilisateur ; ou une tête de l'utilisateur lorsque le visiocasque VR est monté sur la tête de l'utilisateur et/ ou dans lequel les interconnexions conductrices de l'ensemble d'interconnexions conductrices sont composées d'au moins un parmi : un câblage conducteur ; une feuille conductrice ; un tissu conducteur ; et une encre conductrice.

5. Visiocasque VR selon la revendication 1, comprenant en outre :
le dispositif utilisateur portable, dans lequel le dispositif utilisateur portable est configuré pour détecter un emplacement respectif (231,232) sur l'écran tactile pour chaque événement tactile déclenché par un contact conducteur de l'ensemble de contacts conducteurs, déterminer une orientation du panneau d'affichage par rapport au boîtier sur base de l'emplacement respectif détecté pour chaque événement tactile, et configurer au moins un fonctionnement d'affichage du dispositif utilisateur portable sur base de l'orientation déterminée.

6. Procédé (700) pour un dispositif utilisateur portable (102) ayant un écran tactile (112) associé à un panneau d'affichage (612), le procédé comprenant :
en réponse à l'incorporation de manière amovible (702) du dispositif utilisateur portable dans le boîtier (104) du visiocasque VR (100) selon l'une quelconque des revendications précédentes, la détection (704) d'un emplacement respectif (231, 232) sur l'écran tactile du dispositif utilisateur portable pour chaque événement tactile déclenché par un contact conducteur (121-124, 401,402) de l'ensemble de contacts conducteurs ; et
la détermination (706, 708) sur le dispositif utilisateur portable, d'une orientation (234) du panneau d'affichage (612) du dispositif utilisateur portable par rapport au boîtier sur base de l'emplacement respectif détecté pour chaque événement tactile.

7. Procédé selon la revendication 6, comprenant en outre :
la configuration (710, 712) d'au moins un fonctionnement d'affichage du dispositif utilisateur portable sur base de l'orientation.

8. Procédé selon la revendication 7, dans lequel :
la configuration de l'au moins un fonctionnement d'affichage du dispositif d'utilisateur portable comprend la configuration (712) de l'au moins une opération d'affichage en réponse à une différence entre l'orientation et une orientation attendue définie (224) du panneau d'affichage étant inférieure à un seuil spécifié ; et
le procédé comprend en outre :
la fourniture (710) d'instructions audio ou visuelles à un utilisateur pour réaligner manuellement le dispositif utilisateur portable dans le boîtier en réponse à la différence étant supérieure au seuil spécifié.

9. Procédé selon la revendication 7, dans lequel :
la configuration de l'au moins un fonctionnement d'affichage du dispositif utilisateur portable comprend la configuration d'une orientation d'images de réalité virtuelle affichées pour l'utilisateur via le panneau d'affichage.

10. Procédé selon la revendication 6, dans lequel :
l'orientation du panneau d'affichage comprend une orientation actuelle (234) du panneau d'affichage par rapport à une orientation attendue définie (224) du panneau d'affichage par rapport au boîtier.

11. Procédé selon la revendication 6, dans lequel :
la détermination de l'orientation du panneau d'affichage comprend :
la détermination d'un décalage entre un emplacement actuel (231 232) sur l'écran tactile pour un événement tactile déclenché par un contact conducteur et un emplacement attendu pour l'événement tactile (221 222) ; et
la détermination d'au moins une d'une position du panneau d'affichage et d'une rotation du panneau d'affichage sur base du décalage.

12. Dispositif utilisateur portable (102), comprenant :
un écran tactile (112) ;
un panneau d'affichage (612) ;
une mémoire (604) pour stocker un ensemble d'instructions exécutables (616) ; et
un processeur (602) couplé à l'écran tactile, au panneau d'affichage et à la mémoire, le processeur pour exécuter l'ensemble d'instructions exécutables, dans lequel l'exécution de l'ensemble d'instructions exécutables manipule le processeur pour :
en réponse à l'incorporation de manière amovible du dispositif utilisateur portable dans le boîtier (104) du Visiocasque de réalité virtuelle (VR) (100) selon l'une quelconque des revendications 1 à 5, détecter un emplacement respectif (231,232) sur l'écran tactile (112) du dispositif utilisateur portable pour chaque événement tactile déclenché par un contact conducteur (121 -124,401,402) de l'ensemble de contacts conducteurs ; et
la détermination d'une orientation (234) du panneau d'affichage (612) du dispositif utilisateur portable par rapport au boîtier sur base de l'emplacement respectif détecté pour chaque événement tactile.

13. Dispositif utilisateur portable selon la revendication 12, dans lequel l'exécution de l'ensemble d'instructions exécutables manipule en outre le processeur pour :
configurer au moins un fonctionnement d'affichage du dispositif utilisateur portable sur base de l'orientation.

14. Dispositif utilisateur portable selon la revendication 13, dans lequel la manipulation du processeur pour configurer l'au moins un fonctionnement d'affichage du dispositif utilisateur portable comprend une configuration d'une orientation d'images de réalité virtuelle affichées pour l'utilisateur via le panneau d'affichage.

15. Dispositif utilisateur portable selon la revendication 12, dans lequel :
l'orientation du panneau d'affichage comprend une orientation actuelle (234) du panneau d'affichage par rapport à une orientation attendue définie (224) du panneau d'affichage par rapport au boîtier, dans lequel la manipulation du processeur pour déterminer l'orientation du panneau d'affichage comprend la manipulation du processeur pour :
déterminer un décalage entre un emplacement actuel sur l'écran tactile pour un événement tactile déclenché par un contact conducteur et un emplacement attendu pour l'événement tactile ; et
déterminer au moins une position du panneau d'affichage et une rotation du panneau d'affichage sur base du décalage.
